# EUROPÄISCHE PATENTSCHRIFT

(11) **EP 3 601 018 B1**
(45) Veröffentlichungstag und Bekanntmachung des Hinweises auf die Patenterteilung: **05.05.2021**
(21) Anmeldenummer: 18710487.2
(22) Anmeldetag: 16.03.2018
(51) Int. Cl.: B62D 35/00, B62D 35/02

(54) **SYSTEM ZUR AERODYNAMISCHEN VERBESSERUNG EINES LANDFAHRZEUGES INSBESONDERE VON EINEM LKW ODER ÄHNLICHEM**
SYSTEM FOR AERODYNAMICALLY IMPROVING A LAND VEHICLE, IN PARTICULAR A TRUCK OR THE LIKE
SYSTÈME D'AMÉLIORATION AÉRODYNAMIQUE D'UN VÉHICULE TERRESTRE, NOTAMMENT D'UN CAMION OU SIMILAIRE

(30) Priorität: 22.03.2017 IT 201700031554
(43) Veröffentlichungstag der Anmeldung: 05.02.2020
(73) Patentinhaber: Eghi Srl, 39030 Sexten (IT)
(72) Erfinder: EGARTER, Christoph, 39030 Sexten (IT)
(74) Vertreter: Ausserer, Anton
(86) Internationale Anmeldenummer: PCT/EP2018/056659
(87) Internationale Veröffentlichungsnummer: WO 2018/172207

(56) Entgegenhaltungen:
- EP-A1- 1 870 322
- DE-A1-102012 010 002
- US-A1- 2014 110 968

## Beschreibung

Die vorliegende Erfindung bezieht sich auf ein System zur aerodynamischen Verbesserung eines Landfahrzeuges, insbesondere von einem LKW oder ähnlichem.

Die aerodynamischen Merkmale eines Fahrzeuges zählen zu den wichtigsten Merkmalen für den Kraftstoffverbrauch. Insbesondere für Fahrzeuge, die eine große Anzahl von Kilometern zurücklegen, kann auch eine geringe Optimierung der aerodynamischen Merkmale eines Fahrzeuges große Vorteile bringen. Eine Einsparung von Kraftstoff bedeutet Kostensenkung. Außerdem führt die Kraftstoffverbrauchssenkung zu geringerer Umweltverschmutzung und kann damit auch steuerliche Vorteile mit sich bringen.

Unter dem Begriff Fläche, Wandfläche oder Wand wird folgend die Oberfläche, die Wand und/oder das Paneel verstanden, das eine Fläche bildet

Es sind eine Vielzahl von Systemen bekannt, welche den Luftfluss verbessern und damit die aerodynamischen Merkmale eines Fahrzeuges.

Aus dem US 8,276,972 ist ein System bekannt, in dem Ablenkschilder vor den Hinterreifen des LKW/Anhängers an der Unterseite des Fahrzeuges verbaut sind. Mit deren Hilfe soll der Staudruck des Luftflusses auf die Reifen verringert und der Luftfluss nach unten in Richtung Straßenoberfläche gelenkt werden. Die Wirbelschleppe, d.h. die Verwirbelungen der Luft hinter dem Fahrzeug, wird nur geringfügig verändert.

Nachteilig ist hier jedoch die Verringerung der Bodenfreiheit, da Beschädigungsgefahr durch Steinschlag und Ähnlichem entsteht.

Aus der US 2008/0309122 A ist eine Struktur bekannt die am Ende eines Fahrzeuges angeordnet ist. Diese Struktur verjüngt sich und reduziert deshalb den Luftwiderstand des Fahrzeuges.

Das Anbringen am Ende des Fahrzeuges bringt eine Verlängerung der Struktur mit sich und erschwert das Be/ und Entladen und die Manövrierfähigkeit des Fahrzeuges.

Aus der DE 10 2012 010 002 ist eine gattungsgemäße Windleiteinrichtung für Nutzfahrzeuge mit einem Luftleitsystem zur Reduzierung des Luftwiderstands mit zumindest einem am Heck angeordnetem Luftleitelement bekannt. Dieses ist als Diffusor ausgebildet.

Aus der DE 10 2012 010 002 ist bekannt, dass am Ende ein Heckunterfahrschutzelement vorhanden ist, welches aus zwei Horizontal- und zwei Vertikalstreben gebildet ist. Das Heckunterfahrschutzelement soll den Luftfluss wenig stören/beeinflussen und die einzige Aufgabe ist es, die Sicherheit bezüglich des hinteren Unterfahrschutzes zu erfüllen, ohne den Luftfluss zu unterbrechen oder zu beeinflussen.

Aus der EP 1 870 322 ist auch ein System bekannt um den Luftstrom für ein Landfahrzeug zu verbessern. Das dort beschriebene Element am unteren Ende des LKW ist als Diffusor ausgebildet. In Heckrichtung zur Fläche ist ein Unterfahrschutz angeführt. Dieser weist auch eine senkrechte Stirnfläche auf. Auch das in dieser Veröffentlichung beschriebene Element an der Unterseite am Ende des LKW hat die Aufgabe so wenig wie möglich den Luftstrom zu stören.

Aus der US 2014/011 0968 A1 ist auch ein System bekannt, mit welchem der Luftstrom reguliert werden soll.
Die dort beschriebenen Abweiser befinden sich vor den Hinterrädern des Anhängers, um dort den Staudruck zu verringern. Die Wirbelschleppe dahinter wird jedoch wenig oder gar nicht beeinflusst.

Die Luftwirbel am Ende des Landfahrzeuges insbesondere eines LKW sind sehr wichtig in Bezug auf das gesamte aerodynamische Verhalten des Fahrzeuges.
Diese Luftwirbel, die die Wirbelschleppe bilden, werden vor allem durch die Größe der Basisfläche bestimmt, welche die Heckseite des Lkws ist.

Die Aufgabe der vorliegenden Erfindung ist ein System für Landfahrzeuge insbesondere LKW oder ähnlichem zu Verfügung zu stellen, welches die aerodynamischen Merkmale verbessert, insbesondere den Luftstrom/die Wirbelschleppe am Ende eines LKW oder ähnlichen, ohne dem Fahrzeug Elemente hinzuzufügen, welche im Alltag hinderlich sind oder das Fahrzeug schwieriger in der Handhabung gestalten.

Diese Aufgabe wird durch ein erfindungsgemäßes System für ein Landfahrzeug, insbesondere für einen Lastkraftwagen, Anhänger eines Lastkraftwagen, welches auf der Unterseite des Fahrzeuges angebracht ist, gegenüberliegend zur Straßenfläche am hinteren Teil des LKW, umfassend zumindest einen Teil welcher sich in Längsrichtung geneigt und nach hinten verjüngend zum hintern Teil des Fahrzeuges hin erstreckt. Erfindungsgemäß ist im Wesentlichen am Ende der geneigten Fläche nach der letzten Achse des Fahrzeuges ein Element zwischen der Straßenoberfläche und der geneigten Fläche angeordnet, wobei die horizontale Achse des Elements im Wesentlichen dieselbe Neigung aufweist, wie die geneigte Fläche.

Auf diese Art und Weise wird der Luftfluss nach hinten hin mit einem überraschenden Effekt abgeleitet und die Wirbelschleppe verringert, denn die geneigte Fläche und das Element erzeugen einen Synergieeffekt.

Der Kombinationseffekt der geneigten Fläche welche eine Neigung gegenüber der Straßenoberfläche aufweist, vorteilhafterweise zwischen 10°-30°, besonders vorteilhaft zwischen 15°-17° und dem geneigten Element, dessen horizontale Achse im Wesentlichen dieselbe Neigung wie die geneigte Fläche aufweist, verbessert die aerodynamischen Eigenschaften des Landfahrzeuges.

Das geneigte Element kann zum Anbringen des Kennzeichens verwendet werden.

Außerdem kann das geneigte Element als Flügel ausgebildet werden. Dadurch wird der Synergieeffekt zwischen der geneigten Wandfläche und dem Element verstärkt.

In einer weiteren Ausführungsform erstreckt sich die geneigte Fläche nur teilweise über die Breite des Fahrzeuges.

In bevorzugter Weise erstreckt sich die geneigte Fläche von der hinteren Achse des LKWs bis zum hinteren Ende des LKW.

Ein Hohlkörper kann so geformt sein, dass er als Unterseite die geneigte Fläche aufweist. Dieser Hohlköper kann zur Aufbewahrung von Werkzeug, Reservereifen und ähnlichem, als Stauraum verwendet werden.

Weitere Merkmale und Details einer bevorzugten und nicht begrenzenden Ausführungsform eines erfindungsgemäßen Systems werden nachfolgend in der Detailbeschreibung mit Hilfe der beiliegenden Figuren klar beschrieben:
- Die Figur 1 zeigt die Heckansicht eines LKWs an dem das erfindungsgemäße System in einer ersten Ausführungsform angebracht ist.
- Die Figur 2 zeigt einen Schnitt von Figur 1.

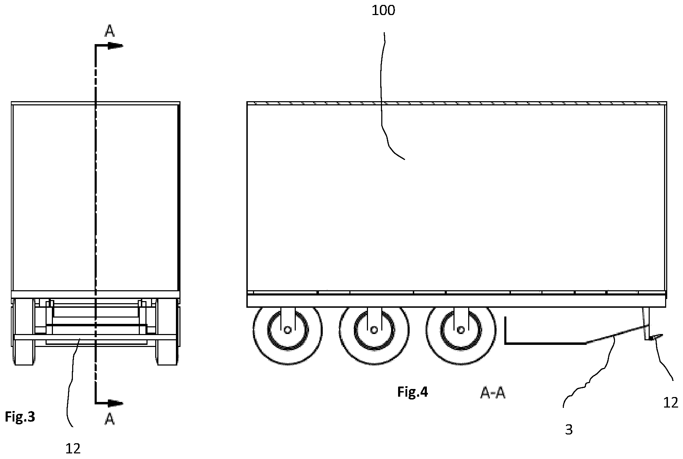

- Die Figur 3 zeigt die Heckansicht eines LKWs an dem das erfindungsgemäße System in einer zweiten Ausführungsform angebracht ist.
- Die Figur 4 zeigt einen Schnitt von Figur 3.

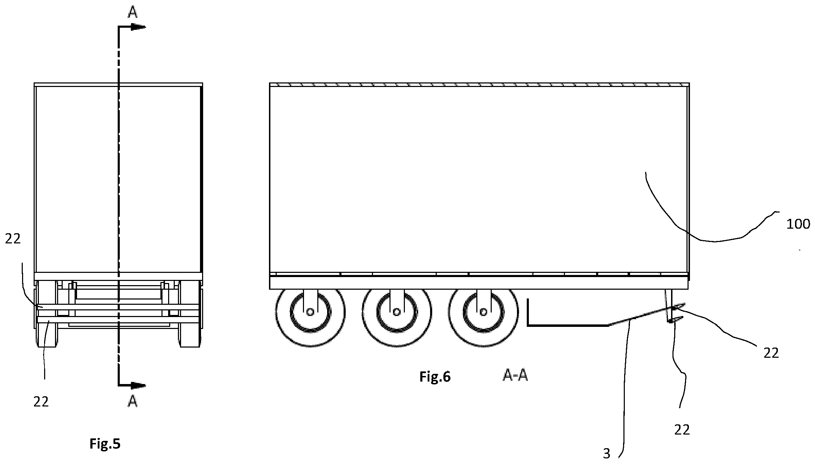

- Die Figur 5 zeigt die Heckansicht eines LKWs an dem das erfindungsgemäße System in einer dritten Ausführungsform angebracht ist.
- Die Figur 6 zeigt einen Schnitt von Figur 5.
- Die Figur 7 zeigt eine perspektivische Ansicht von hinten eines erfindungsgemäßen System.
- Die Figur 8 zeigt eine perspektivische Ansicht einer weiteren erfindungsgemäßen Ausführungsform.
- Die Figur 9 zeigt eine perspektivische Ansicht von unten einer weiteren erfindungsgemäßen Ausführungsform.
- Die Figur 10 zeigt eine perspektivische Ansicht von unten einer weiteren erfindungsgemäßen Ausführungsform.
- Die Figur 11 zeigt eine perspektivische Ansicht einer weiteren erfindungsgemäßen Ausführungsform.

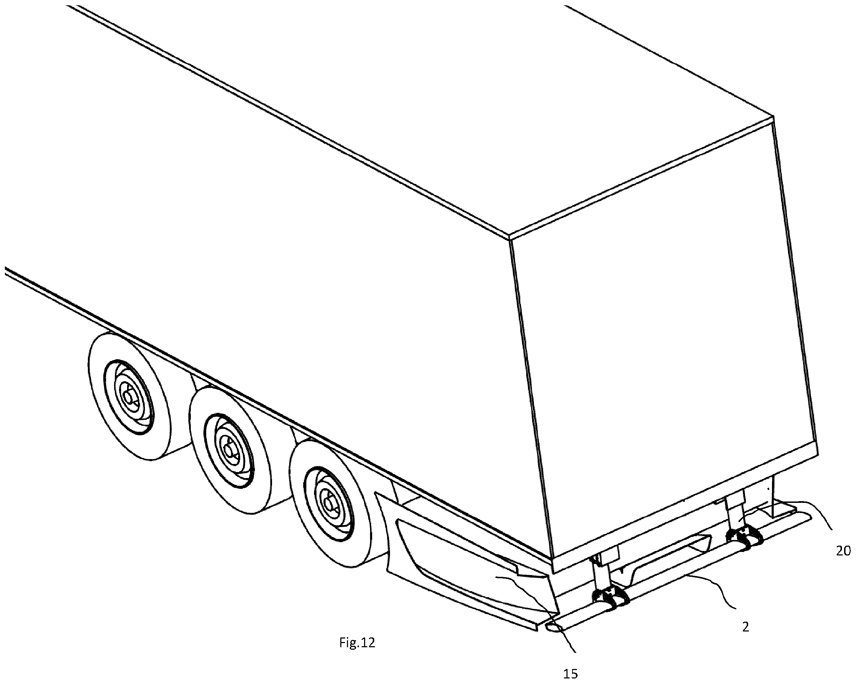

- Die Figur 12 zeigt eine perspektivische Ansicht von oben einer weiteren erfindungsgemäßen Ausführungsform.
- Die Figur 13 zeigt eine perspektivische Ansicht von unten einer erfindungsgemäßen Ausführungsform.

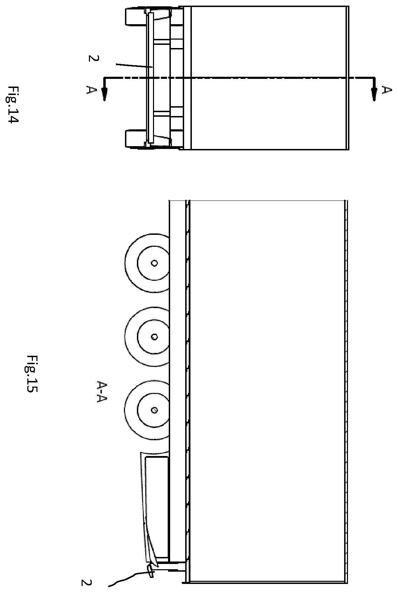

- Die Figur 14 zeigt die Heckansicht eines LKWs an dem das erfindungsgemäße System in einer weiteren Ausführungsform angebracht ist.
- Die Figur 15 zeigt einen Schnitt von Figur14.

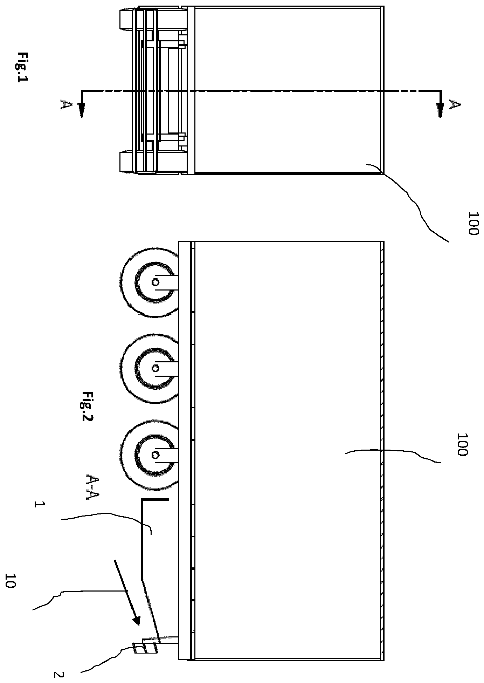

In Figur 1 ist mit der Bezugsziffer 100 ein Landfahrzeug angezeigt, welches ein erfindungsgemäßes System 1 umfasst.

Unter Landfahrzeug versteht man insbesondere Lastkraftwagen (LKW), LKW-Anhänger und ähnliche Fahrzeuge. In der Figur 2 wird mit der Bezugsziffer 3 eine Fläche dargestellt, welche sich in vorteilhafter Weise von der letzten Achse bis zum Ende des Landfahrzeuges 100 erstreckt. Diese erste Fläche 3 ist der Straßenoberfläche gegenüber geneigt und verjüngt das Fahrzeug in Heckrichtung. Im Wesentlichen in Richtung des hinteren Ende des Fahrzeuges ist zumindest ein Element 2, 12, 22 zwischen der ersten Fläche 3 und der Straßenfläche angeordnet, wobei die horizontale Achse des Elements 2,12,22 im Wesentlichen parallel zur Fläche 3 angeordnet ist. Das Element 2, 12, 22 ist mit dem Rahmen des Landfahrzeuges 100 verbunden, zum Beispiel mittels zwei Rohrprofile 20.

Der Luftfluss 10 passiert die geneigte Fläche 3. Der Luftfluss 10 wird so in die Basisfläche hinter dem LKW abgeleitet. Die Basisfläche eines Fahrzeuges 100 ist jene zur Fahrtrichtung senkrecht stehende Fläche am Heck, von der die Wirbelschleppe verursacht wird. Durch das Element 2,12,22 wird der Luftfluss 10 effizienter nach oben hin abgelenkt, um dort die Wirbelschleppe zu verändern, indem der Unterdruck der durch die Basisfläche gebildet wird, durch diesen Luftfluss 10 verringert wird.

Das Element 2,12,22 kann in verschiedenen Formen ausgebildet werden, zum Beispiel als gerade Fläche, oder als Flügel 12 oder es können mehrere Elemente, auch identisch übereinander angeordnet werden.

In einer weiteren Ausführungsform kann auf dem Element 2, 12, 22 ein Kennzeichen und/oder eine Lichtanlage angebracht werden.

Das Element 2, 12, 22 kann auch so ausgebildet sein, um Stöße besser aufnehmen zu können.

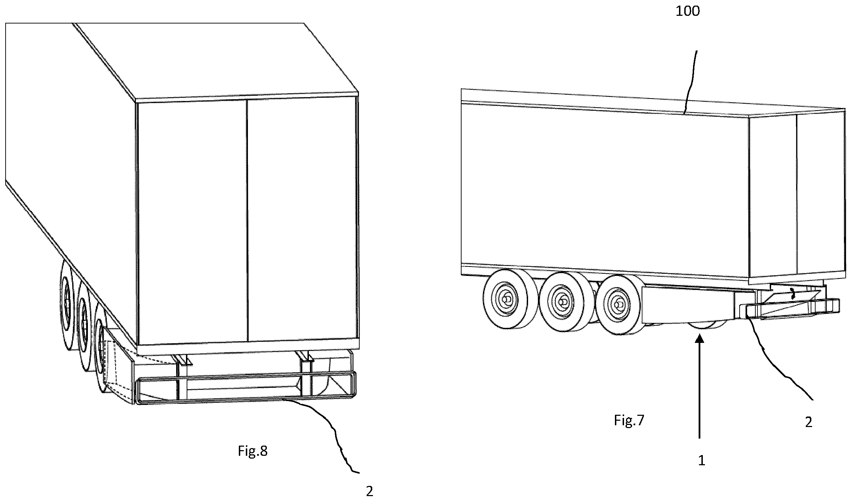

In einer weiteren Ausführungsform bildet die erste geneigte Fläche 3 die Unterseite eines Hohlkörpers und dieser kann als Stauraum für Reservereifen, Werkzeuge usw. genutzt werden. Dieser Hohlkörper kann heckseitig beladen werden, wie in Figur 7 dargestellt oder seitlich oder beides.

Um den Luftfluss zu verbessern, können auch seitliche Karosserieelemente verbaut werden, wie in Figur 8 dargestellt. Diese können Luftauslässe enthalten, um die Radkästen zu entlüften.

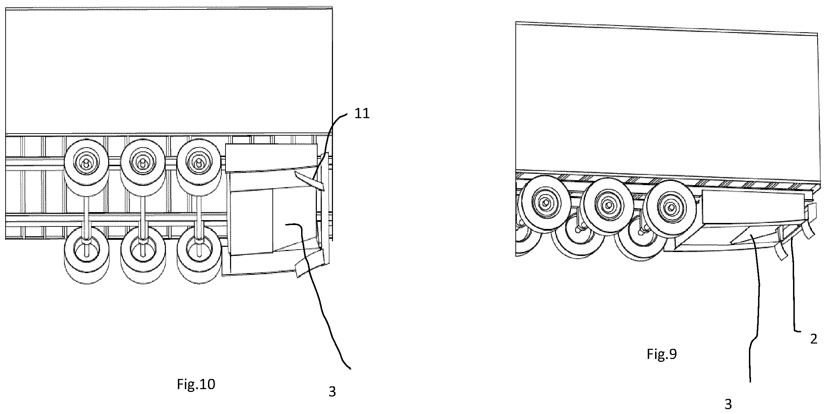

In einer weiteren Ausführungsform ist in Figur 10 mit der Bezeichnungsziffer 11 ein zusätzliches Bauteil dargestellt. Dieses Bauteil 11 dient als Schmutzfang und kann gleichzeitig die Luftströmung in Richtung des Elementes 2, 12, 22 lenken.

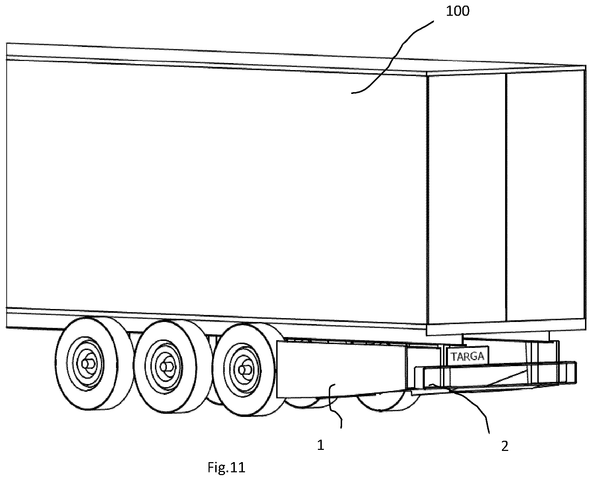

In der Figur 11 ist eine weitere Ausführungsform dargestellt. In dieser trägt das Element 2 das Kennzeichen oder andere Identifizierungsschilder des Fahrzeuges 100.

Das Element 2, 12, 22 kann auch als Stoßstange ausgebildet sein.

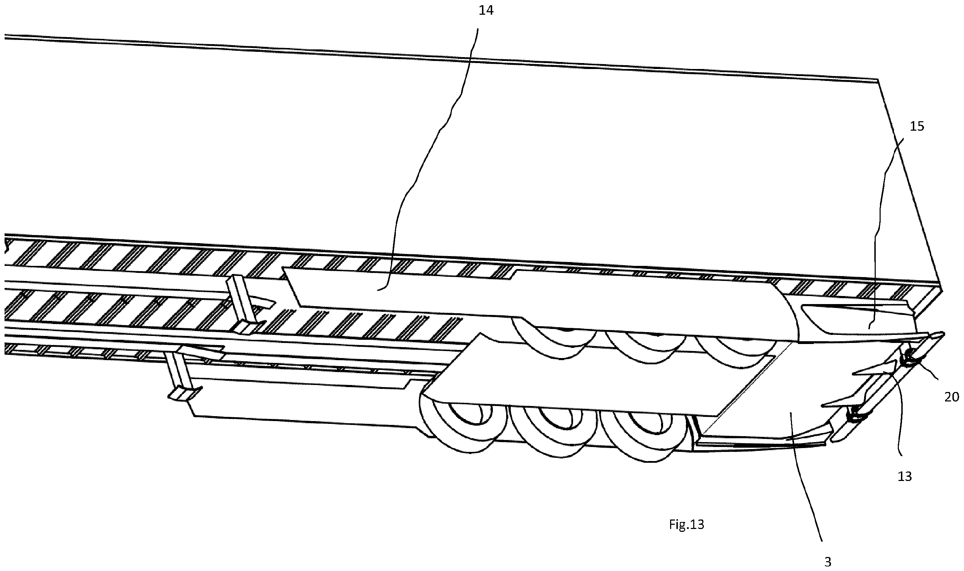

In Figur 13 ist eine weitere Ausführungsform des erfindungsgemäßen Systems dargestellt. Auf der geneigten Fläche 3 sind Luftleitelemente 13 angebracht. Diese Luftleitelemente sind vertikal parallel zur Fahrtrichtung angeordnet. Auf diese Art und Weise wird der Luftstrom besser geleitet, was wiederum die Luftwirbelschleppe verringert.

In Figur 13 sind außerdem seitliche Elemente z.B Karosserieelemente bzw. Luftleitelemente 14 dargestellt, die Reifen an der Außenseite abdecken. Diese Elemente verringern die Turbulenzen zwischen dem Luftstrom 10 unter dem LKW 100 und dem Luftstrom seitliche, des LKW. Außerdem können auch am Ende der geneigten Fläche 3 auch seitlich geneigte Luftleitelemente 15 vorgesehen sein, welche den Luftstrom 10 in Richtung des Zentrums des Fahrzeuges ablenken

Es ist schließlich klar, dass an dem beschriebenen System für den Fachmann naheliegende Zusätze, Abänderungen oder Varianten vorgenommen werden können, ohne deshalb den durch die beigefügten Patentansprüche gebildeten Schutzbereich zu verlassen.

Aufstellung der Bezugsziffern Absatz
1. Erfindungsgemäßes System
2.Element
3.Erste geneigte Wand
10 Luftfluss
11 Ablenkschirm
12 Element
13 Luftleitelement
14 Karosserieelemente bzw. Luftleitelemente
15 geneigtes Luftleitelement
20 Rohrprofile
22 Element
100 Landfahrzeug, Lastkraftwagen, Anhänge oder ähnliches

## Patentansprüche

1. System für ein Landfahrzeug (100), insbesondere für einen Lastkraftwagen, Anhänger eines Lastkraftwagen, welches auf der Unterseite des Fahrzeuges angebracht ist, gegenüberliegend zur Straßenfläche am hinteren Teil des LKW, umfassend zumindest einen Teil welcher sich in Längsrichtung geneigt und nach hinten verjüngend zum hinteren Teil des Fahrzeuges (100) hin erstreckt und **dadurch gekennzeichnet, dass** im Wesentlichen am Ende der geneigten Fläche (3) nach der letzten Achse des Fahrzeuges ein Element (2,12,22) zwischen der Straßenoberfläche und der geneigten Fläche (3) angeordnet ist, wobei die horizontale Achse des Elements (2,12,22) im Wesentlichen dieselbe Neigung aufweist, wie die geneigte Fläche (3).

2. System nach Anspruch 1, **dadurch gekennzeichnet dass** das Element (2,12,22) zumindest zwei Teile aufweist mit einer horizontalen Achse, welche im Wesentlichen dieselbe Neigung wie die geneigte Fläche (3) aufweist.

3. System nach einem der vorhergehenden Ansprüche, **dadurch gekennzeichnet, dass** die vordere geneigte Fläche (3) die Unterseite eines Hohlkörper bildet.

4. System nach einem der vorhergehenden Ansprüche, **dadurch gekennzeichnet, dass** zumindest ein Element (2,12,22) als Flügel (12) ausgebildet ist.

5. System nach einem der vorhergehenden Ansprüche, **dadurch gekennzeichnet, dass** seitliche Luftleitbleche (11) angeordnet sind um den Luftfluss (10) zu verbessern.

6. System nach einem der vorhergehenden Ansprüche, **dadurch gekennzeichnet, dass** das Element (2,12,22) eine Stoßstange bildet.

7. System nach einem der vorhergehenden Ansprüche, **dadurch gekennzeichnet, dass** das Element (2,12,22) als Befestigung für ein Kennzeichen oder ähnliches dient.

8. System nach einem der vorhergehenden Ansprüche, **dadurch gekennzeichnet, dass** die geneigte Fläche (3) und die horizontale Achse des Elements (2,12,22) einen Neigungswinkel mit der Straßenoberfläche zwischen 10°-30° in bevorzugter Weise zwischen 15°-17° bildet.

9. System nach einem der vorhergehenden Ansprüche, **dadurch gekennzeichnet, dass** auf der geneigten Fläche (3) Luftleitelemente (13) angebracht sind, wobei diese Luftleitelemente vertikal parallel zur Fahrtrichtung angeordnet sind.

10. System nach einem der vorhergehenden Ansprüche, **dadurch gekennzeichnet, dass** Reifen des Landfahrzeug (100) zumindest teilweise durch Luftleitelemente (14) an der Außenseite abgedeckt sind.

## Claims

1. A system for land vehicles (100), namely trucks and truck trailers, which is located on the bottom surface of the vehicle, facing the road surface on the rear end portion of the truck, comprising at least one longitudinally-inclined portion, tapering toward the back of the vehicle (100), and **characterized in that**, substantially at the end of the inclined wall (3), after the last axle of the vehicle, an element (2, 12, 22) is interposed between the road surface and the inclined wall (3) and wherein the horizontal axis of the element (2, 12, 22) has substantially the same inclination as the inclined wall (3).

2. A system as claimed in claim 1, **characterized in that** the element (2,12,22) has at least two portions with a horizontal axis, that has substantially the same inclination as the inclined surface (3).

3. A system as claimed in any of the preceding claims, **characterized in that** the front inclined wall (3) forms the bottom surface of a hollow body.

4. A system as claimed in any of the preceding claims, **characterized in that** at least one element (2,12,22) is designed with a wing shape (12).

5. A system as claimed in any of the preceding claims, **characterized in that** side deflectors (11) are arranged for improved air flow (10).

6. A system as claimed in any of the preceding claims, **characterized in that** the element (2,12,22) forms a bumper (12).

7. A system as claimed in any of the preceding claims, **characterized in that** the element (2,12,22) is used as a mount for a license-plate or the like.

8. A system as claimed in any of the preceding claims, **characterized in that** the inclined wall (3) and the horizontal axis of the element (2,12,22) form an angle of inclination with the road surface that ranges from 10° to 30°, preferably from 15° to 17°.

9. A system as claimed in any of the preceding claims, **characterized in that** air deflecting members (13) are attached to the inclined surface (3), such air deflecting members being arranged vertically parallel to the driving direction.

10. A system as claimed in any of the preceding claims, **characterized in that** the wheels of the land vehicle (100) are at least partially covered by the air deflecting members (14) on the outer side.

## Revendications

1. Système pour véhicules terrestres (100), notamment des camions et des remorques de camion, situé sur la surface inférieure du véhicule faisant face à la surface de la route sur la partie d'extrémité arrière du camion, comprenant au moins une partie inclinée dans la direction longitudinale, et s'effilant vers la partie arrière du véhicule (100), et **caractérisée en ce que**, sensiblement à la fin de la paroi inclinée (3), après le dernier essieu du véhicule, un élément (2, 12, 22) est interposé entre la surface de la route et la paroi inclinée (3), et dans lequel l'axe horizontal de l'élément (2, 12, 22) a sensiblement la même inclinaison que la paroi inclinée (3).

2. Système selon la revendication 1, **caractérisé en ce que** l'élément (2,12,22) possède au moins deux parties avec un axe horizontal ayant sensiblement la même inclinaison que la surface inclinée (3).

3. Système selon n'importe laquelle des revendications précédentes, **caractérisé en ce que** la paroi avant inclinée (3) constitue la surface inférieure d'un corps creux.

4. Système selon n'importe laquelle des revendications précédentes, **caractérisé en ce qu'**au moins un élément (2,12,22) est conçu avec une forme d'aile (12).

5. Système selon n'importe laquelle des revendications précédentes, **caractérisé en ce que** des déflecteurs d'air latéraux (11) sont agencés pour améliorer l'écoulement d'air (10).

6. Système selon n'importe laquelle des revendications précédentes, **caractérisé en ce que** l'élément (2, 12, 22) forme un pare-chocs (12).

7. Système selon n'importe laquelle des revendications précédentes, **caractérisé en ce que** l'élément (2,12,22) est utilisé comme support pour une plaque ou similaires.

8. Système selon n'importe laquelle des revendications précédentes, **caractérisé en ce que** la paroi inclinée (3) et l'axe horizontal de l'élément (2,12,22) forment un angle d'inclinaison avec la surface de la route allant de 10° à 30°, de préférence de 15° à 17°.

9. Système selon n'importe laquelle des revendications précédentes, **caractérisé en ce que** les éléments déflecteurs d'air (13) sont fixés à la surface inclinée (3), lesdits éléments déflecteurs d'air étant verticalement parallèles à la direction de roulement.

10. Système selon n'importe laquelle des revendications précédentes, **caractérisé en ce que** les roues du véhicule terrestre (100) sont au moins partiellement couvertes par des éléments déflecteurs d'air (14) sur le côté extérieur.
